# EUROPEAN PATENT SPECIFICATION

(11) **EP 2 702 179 B1**
(45) Date of publication and mention of the grant of the patent: **31.07.2019**
(21) Application number: 12725175.9
(22) Date of filing: 30.04.2012
(51) Int. Cl.: C22B 9/10

(54) **GAS AND PARTICULATE DELIVERY SYSTEM AND METHOD FOR METALLURGICAL VESSEL**
GAS- UND PARTIKELABGABESYSTEM UND VERFAHREN FÜR METALLURGISCHES GEFÄSS
SYSTÈME ET PROCÉDÉ D'AMENÉE DE GAZ ET DE PARTICULES POUR RÉCIPIENT MÉTALLURGIQUE

(30) Priority: 29.04.2011 US 201161480982 P
(43) Date of publication of application: 05.03.2014
(73) Proprietor: Berry Metal Company, Harmony, PA 16037 (US)
(72) Inventor: WHITE, Jacob, J., Harmony, PA 16037 (US); VALENTAS, Louis, S., Harmony, PA 16037 (US); SMITH, Todd, G., Harmony, PA 16037 (US)
(74) Representative: Barton, Matthew Thomas
(86) International application number: PCT/US2012/035845
(87) International publication number: WO 2012/149551

(56) References cited:
- DE-A1- 19 748 389
- GB-A- 837 539
- GB-A- 2 121 936
- JP-A- 7 157 816
- US-A1- 2009 013 827

## Description

### FIELD OF THE INVENTION:

The present invention relates to injectors for injecting particulate matter and a gas into metallurgical refining vessels. The particulate material may be for example calcium oxide, the gas may be for example oxygen, and the metallurgical refining vessel may be for example a basic oxygen furnace (BOF), an electric arc furnace (EAF), or an argon-oxygen decarburization vessel (AOD).

### BACKGROUND OF THE INVENTION

United States Patent Application Publication No. US 2009/0013827 entitled "CONDITIONED QUICKLIME FOR INJECTION TO A MOLTEN BATH OF A STEEL-MAKING VESSEL" discloses a method of producing steel using a steel-making vessel, where lime is used as a flux material that is blown, from above, into a steel-making bath along with an oxygen stream, providing a flux material composition of calcium oxide having a particle size of less than 250 mesh, which contains a flow aid material that is a polymeric siloxane, in an amount of less than 0.5 percent by weight of the calcium oxide, and where the flux material composition along with oxygen is injected through a lance into the steel-making bath contained in the steel-making vessel.

United States Patent No. 7,641,849 discloses an injector for injecting particulate material into metallurgical furnaces having the particulate entering into a chamber and a first gas also injected into the chamber at a supersonic velocity. The chamber has an outlet as a lance with a ceramic tubular barrel of a porous nature and an outer solid exterior coaxial barrel. A second gas is supplied into the space between the barrels, the second gas passes through the inner barrel, mixes with the first gas and particulate, and the mixture is injected into the metallurgical furnace.

United States Patent No. 7,396,503 discloses a lance for injecting particulate matter into a metallurgical furnace. The lance has an inner barrel for introduction of a particulate, the inner barrel terminates at a first Laval nozzle for a shrouding gas in a coaxial barrel, and the first Laval nozzle terminates at a second Laval nozzle for a second shrouding gas in an outer barrel.

United States Patent No. 6,261,338 discloses a lance tip with numerous openings on the lance tip face, a first opening is a nozzle for passage of a gas jet stream, such as oxygen, while a second opening is for ejecting a mixture of powder and carrier gas, and a ring of openings are for injecting a ring of gaseous fuel to create a flame envelope around the first two openings. The powder mixture passage within the lance communicates with a source of powder and a carrier gas and communicates with the opening on the lance face. Powder and a small amount of a carrier gas are provided to an inner tube, moving the powder to an opening with an outer tube, where additional carrier gas is provided to accelerate the powder mixture. The outer tube communicates with the second opening.

The present invention in its various preferred embodiments described herein overcomes shortcomings of the prior art.

### BRIEF SUMMARY OF THE INVENTION

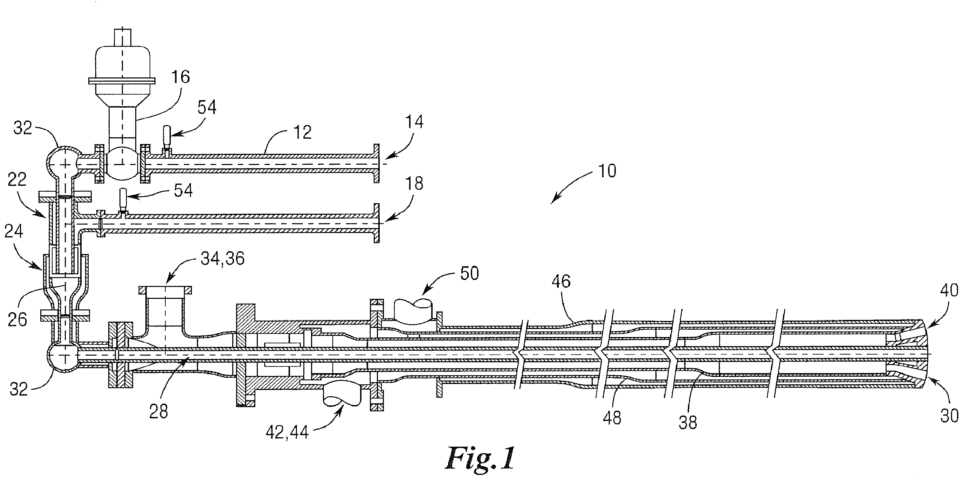

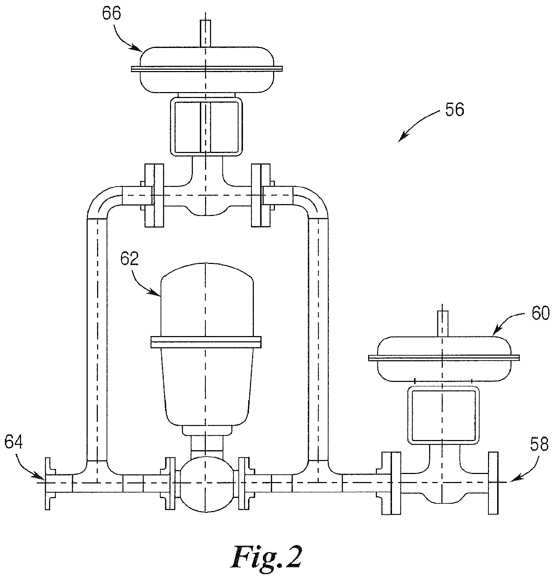

The present invention will be used to inject particulate materials such as lime powder into a metallurgical furnace. The apparatus disclosed in **Figure 1** represents a metallurgical lance having an interior barrel for passage of a particulate in a carrier gas to the lance tip, an intermediate, co-axial barrel to contain and carry the same gas and/or a second gas to the lance tip, and an exterior barrel to contain and carry a coolant for the lance. A particulate inlet tube carrying a particulate such as lime comes to an opening with an outer tube where a carrier gas is provided to accelerate the particulate mixture. The apparatus has a valve in the particulate inlet tube to isolate the particulate source. The figure illustrates the use of wear boxes to reduce abrasion where a turn in the tube is necessary. **Figure 2** illustrates a dual pressure regulated supply for the carrier gas. The lime or other particulate enters into the particulate inlet tube, past the valve, the particulate mixes and is accelerated by the carrier gas, after passing through wear boxes; the particulate passes through the interior wear barrel of the lance and into the furnace. The dual pressure regulator allows for higher pressure during purge and lower pressure during particulate injection.

A first aspect of the present is a method according to claim 1. In preferred embodiments have the particulate as lime and the carrier gas as oxygen. In other preferred embodiments, the method has a low pressure carrier gas regulated by first and second regulating valves; and a high pressure carrier regulated by the first regulating valve and a by-pass valve. In still other preferred embodiments, the low pressure carrier gas and the high pressure carrier gas are regulated by a single pressure regulating valve. And in other preferred embodiments, the low pressure carrier gas and the high pressure carrier gas are modulated by a single pressure regulating valve.

A second aspect of the present invention is an apparatus according to claim 7.

A preferred embodiment has at least one wear box in the particulate inlet tube. Another preferred embodiment has at least one wear box in the outer tube. In some embodiments, there is at least one pressure regulating valve comprises only one pressure regulating valve. In still other embodiments, the at least one pressure regulating valve further comprises a high pressure regulating valve, a low pressure regulating valve downstream of the high pressure regulating valve, and a by-pass valve to by-pass the low pressure regulating valve. In some embodiments, the apparatus further comprises a particulate flow meter in the particulate inlet tube. In other embodiments, the apparatus further comprises a a gas flow meter in the auxiliary gas tube. In still other embodiments, the at least one pressure regulating valve is at a location remote from the metallurgical lance.

### BRIEF DESCRIPTION THE DRAWINGS

**FIG. 1** shows the particulate injection lance and header, the header having a particulate inlet tube, particulate valve, carrier gas inlet tube, wear boxes, and the lance having an inner wear barrel, oxygen inlet, and coolant passages.
**FIG. 2** shows the dual pressure regulated gas supply having bypass valves to allow stopped flow, low flow, and high flow to the carrier gas line.
**FIG. 3** shows in schematic a preferred embodiment of a system according to the present invention.
**FIG. 4** shows a particulate injection lances according to the present invention.
**FIG. 5** shows a close-up of a particulate roto-feed unit according to the present invention and a diagram for scale.
**FIG. 6** shows an example of a typical BOP vessel of a flux system.
**FIG. 7** shows an example of a typical BOP vessel of a lance system according to the present invention.
**FIG. 8** shows a center hole oxygen lance according to the present invention.
**FIG. 9** shows a basic oxygen process with lime injection equipment according to the present invention and a diagram for scale.
**FIG. 10** shows a roto-feed feeder according to the present invention.

### DETAILED DESCRIPTION

It is to be understood that the figures and descriptions of the present invention have been simplified to illustrate elements that are relevant for a clear understanding of the present invention, while eliminating, for purposes of clarity, other steps/elements that may be well known. Those of ordinary skill in the art will recognize that other steps/elements are desirable and/or required in order to implement the present invention. However, because such steps/elements are well known in the art, and because they do not facilitate a better understanding of the present invention, a discussion of such steps/elements is not provided herein. The detailed description of the present invention and the preferred embodiment(s) thereof are set forth in detail below with reference to the attached drawings.

Referring now to the drawings, **FIGS. 1 - 3** illustrate a preferred embodiment according to the present invention for a system to inject a gas/particulate mixture such as an oxygen/calcium oxide mixture into a metallurgical furnace.

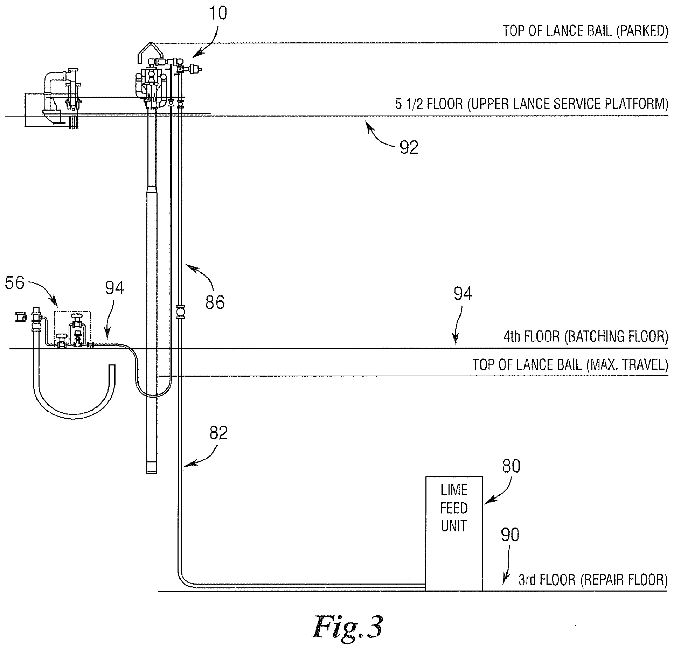

**FIG. 1** represents a preferred embodiment of a metallurgical lance apparatus **10** having particulate inlet tube **12** for introduction of a particulate **14,** for example calcium oxide having a particle size of less than 250 mesh containing s a flow aid material that is an organic siloxane, in an amount of less than 0.5 percent by weight of the calcium oxide, into the system. The particulate inlet tube has a shut-off valve **16** to allow isolation of the first tube **12** from the other components of the lance apparatus **10.** The shut-off valve **16** avoids back pressure to the particulate input feed **14** (**FIG. 2**) or feed unit **80** (**FIG. 3**) which may be a roto-feed lime dispenser.

A carrier gas **18,** for example oxygen, enters the lance apparatus **10** through an auxiliary gas tube **20.** The auxiliary gas tube **20** communicates with an outer tube **22** coaxial with the particulate tube **12.** The particulate **14** from the particulate inlet tube **12** and the carrier gas **18** from the outer tube **22** mix in a chamber **24,** where the carrier gas **18** flows, carrying the particulate **14** as a combined gas/particulate mix **26.** The combined mix **26** enters a inner wear barrel **28** and exits at an aperture **30.**

Preferably the particulate inlet tube **12** and outer tube **22** are arranged in a coaxial manner to allow the mix of the particulate **14** and carrier gas **18** to reduce abrasion along the gas/particulate mix path **26.** As the path for the particulate **14** and combined mix **26** pass through the tubes **12** and **24** and through turns, wear boxes **32** are preferably employed to reduce abrasion.

Oxygen **34** enters the lance apparatus **10** through an oxygen inlet **36.** The oxygen **34** travels through the lance apparatus **10,** is contained between the intermediate barrel **38** and the inner wear barrel **28,** and exits through nozzles **40.** Coolant **42,** for example water, enters the lance apparatus **10** at coolant inlet **44,** is contained and passes through passages defined by exterior barrels **46** and **48.** The coolant **42** exits the lance apparatus **10** through coolant outlet **50.**

In some embodiments, the auxiliary gas tube **20** has an installed carrier gas flow meter **52.** In other embodiments, the particulate inlet tube **12** has an installed particulate flow meter **54.** In preferred embodiments, the carrier gas flow meter **52** and the particulate flow meter **54** are used to monitor and modulate the ideal pressure and flow during particulate injection and purge sequences.

**FIG. 2** represents a carrier gas skid **56** for regulating the flow of the carrier gas **18.** The carrier gas **18** from a carrier gas supply enters the gas skid **56** at aperture **58** (typically at about a pressure of 250 psi). The carrier gas supply may come from an independent auxiliary feed source (not shown) or from the oxygen inlet **36.** The carrier gas **18** passes through a first pressure regulating valve **60,** which may reduce the pressure down to 150 psi from 250 psi. The carrier gas **18** then passes through either by-pass valve **62** or second pressure regulating valve **66** (preferably reducing pressure further to about 30 psi) before exiting the gas skid **56** at skid exit aperture **64.** In some embodiments, the carrier gas **18** is oxygen **34** from an external source. In other embodiments, the carrier gas **18** is oxygen **34** by communication with the main oxygen supply **34, 36.**

In a preferred embodiment, the carrier gas pressure is regulated by the first and second pressure regulating valves **60** and **66** and a by-pass valve **62.** In a more preferred embodiment, a single modulating pressure regulative valve **60** regulates the carrier gas pressure without pressure regulating valve **66** and by-pass valve **62.**

The overall embodiment has a dual pressure regulated carrier gas supply **18** to the auxiliary gas tube **20.** The dual pressure created by the carrier gas **18** passing as high pressure through by-pass valve **62** or as low pressure through the second pressure regulating valve **66.** This allows for lower pressure to be used during particulate injection sequences and a higher pressure to be used to purge the channel of particulate **14** from chamber **24** to the particulate outlet **30** when the particulate injection sequence is not running. During an entire blow sequence, at least one valve, **62** or **66** remains open to maintain positive pressure and reduce plugging issues due to slag ingestion into opening **30.**

In some embodiments, the gas skid **56** is directly attached to the auxiliary gas tube **20.** In other preferred embodiments, the gas skid **56** is placed at a remote location as shown in **FIG. 3. FIG. 3** illustrates an embodiment wherein a lime feed unit **80** is on a lower floor of a building **90.** The lime feed unit **80** is connected by hard piping **82** and/or flex hose **86** to a lance apparatus **10** two floors above **92.** In the embodiment, the gas skid **56** is on an intermediate floor **94,** the gas connected through piping or flex hose **88** to the lance apparatus **10.**

In use, the metallurgical lance system **10** is installed in a metallurgical furnace. The shut-off valve **16** is closed. The particulate inlet tube **12** is connected to a source of particulate **14** such as lime particulate and oxygen gas mixture. The carrier gas skid **56** is attached to/from the skid exit aperture **64** to the auxiliary gas tube **20** as shown in **FIG. 3****.** In a first embodiment of a method for delivery of a gas/particulate mixture to a metallurgical vessel according to the present invention comprises the steps comprising: injecting a low pressure carrier gas **18** through a lance system **10** such that the gas **18** enter the metallurgical furnace, feeding particulate to the low pressure carrier gas such that the gas injects the particulate **14** into the metallurgical furnace, stopping feed of the particulate **14** to the carrier gas, increasing the pressure of the carrier gas **18** to purge the lance system **10.**

In another preferred embodiment of the present invention, the method for delivery of a gas/particulate mixture to a metallurgical vessel comprises the steps of: injecting through a lance system **10** a low pressure carrier gas **18** such that the gas **18** enter the metallurgical vessel, feeding particulate to the low pressure carrier gas such that the gas carries the particulate **14** into the metallurgical vessel, monitoring and modulating the carrier gas flow and particulate flow, stopping feed of the particulate **14,** increasing the pressure of the carrier gas **18** to purge the lance system **10,** monitoring and modulating the carrier gas flow, decreasing the pressure of the carrier gas **18,** and monitoring and modulating the carrier gas flow, and injecting the lance system **10** with the low pressure carrier gas **18.**

In yet another preferred embodiment of the method, lime particulate is charged to a metallurgical vessel using oxygen as a carrier gas, the steps comprising: charging lime particulate **14** to the metallurgical lance system **10** through the particulate inlet tube **12** up to the shut-off valve **16,** charging oxygen as the carrier gas **18** through the first pressure regulating valve **60** and second pressure regulating valve **66** producing a continuous low pressure feed of carrier gas **18** through the lance system **10** to the particulate outlet **30,** then opening the shut-off valve **16,** mixing in a linear fashion the particulate **14** and the carrier gas **18,** closing shut-off valve **16,** opening by-pass valve **62** to purge the system, then closing by-pass valve **62.**

In another preferred embodiment of the method, lime particulate is charged to a metallurgical vessel using oxygen as a carrier gas, the steps comprising: charging lime powder **14** to the metallurgical lance system **10** through the particulate inlet tube **12** up to the shut-off valve **16,** charging oxygen as the carrier gas **18** through the first pressure regulating valve **60** and second pressure regulating valve **66** producing a continuous low pressure feed of carrier gas **18** through the lance system **10** to the particulate outlet **30,** monitoring the carrier gas **18** using a carrier gas flow meter **52** while modulating the carrier gas flow with the second pressure regulatory valve **66,** then opening the shut-off valve **16,** mixing in a linear fashion the particulate **14** and the carrier gas **18,** monitoring the carrier gas **18** using a carrier gas flow meter **52** while modulating the carrier gas flow with the second pressure regulatory valve **66** and monitoring and modulating the particulate flow using a particulate flow meter **54,** closing shut-off valve **16,** opening by-pass valve **62** to purge the system, then closing by-pass valve **62.**

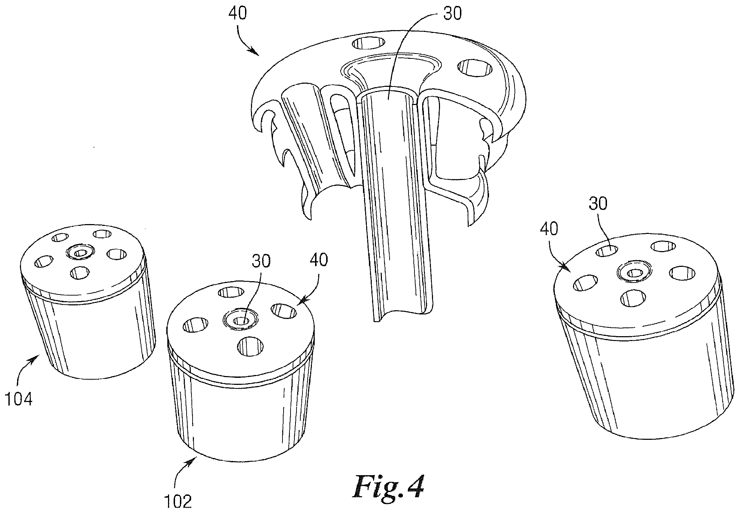

**FIG. 4** illustrates a particulate injection lance according to the present invention. The center figure is a cut-away view of the new lance tip design, with a preferred embodiment of a two or three inch inside diameter aperture **30.** **FIG. 4** also illustrates two other preferred embodiments with nozzles **40** numbering four **102** or five **104.**

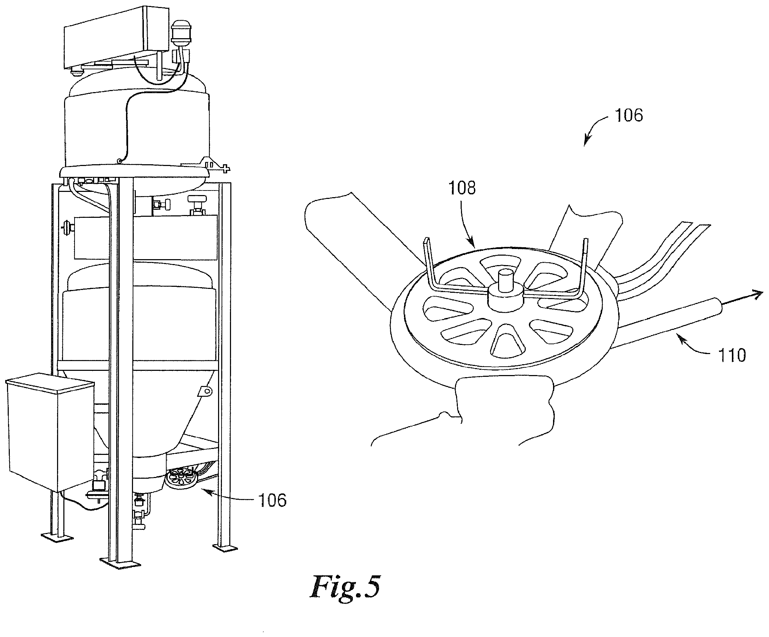

**FIG. 5** illustrates a particulate roto-feed unit **106.** Lime enters the roto-feed unit from above **108.** The **FIG. 5** inset illustrates the location of the particulate roto-feed unit **106.** The lime exits the roto-feed unit through piping **110.**

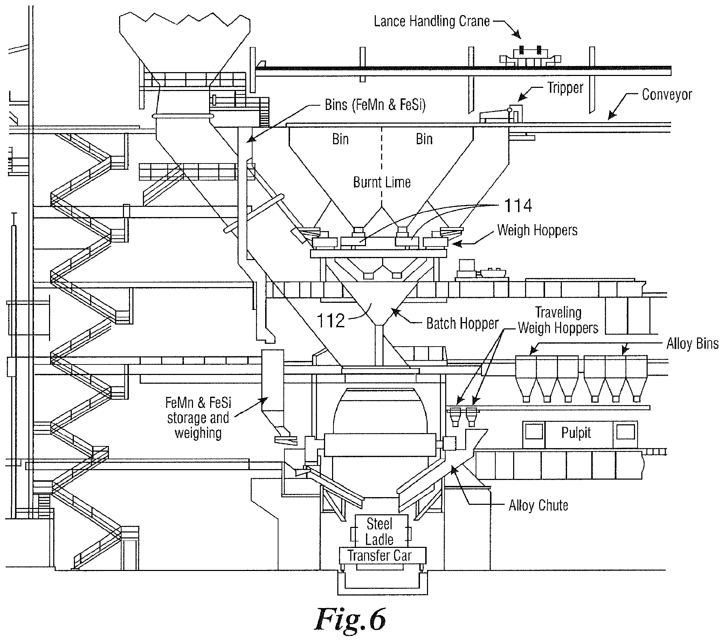

**FIG. 6** illustrates an example of a typical BOP vessel with a flux system as would be understood by a person of skill in the art. In a preferred embodiment, the lime is sized at approximately 2 inch by ¼ inch. In this embodiment, the lime handling system dictates a pebble product. Lime is a friable material and will break down when handled. Lime is fed into the process in large hoppers **112** from a weigh hopper **114** using gravity.

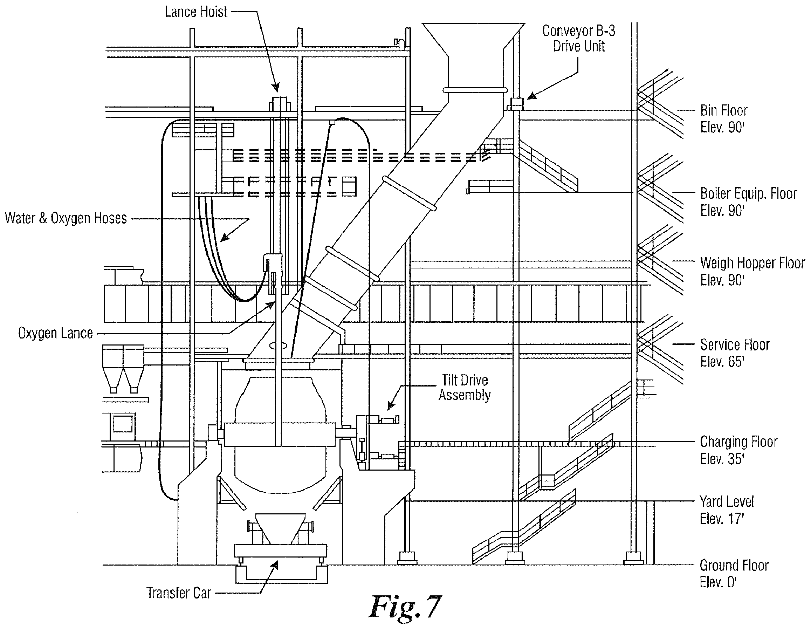

**FIG. 7** illustrates an example of a typical BOP vessel with a lance system as would be understood by a person of skill in the art. Lime is added to the process after the start of the oxygen blow to allow the oxidation reaction to start (ignition). Late lime addition, bulk charging and pebble size can all inhibit quick formation of a basic slag. Slag formation rate control is important to optimize the BOP process.

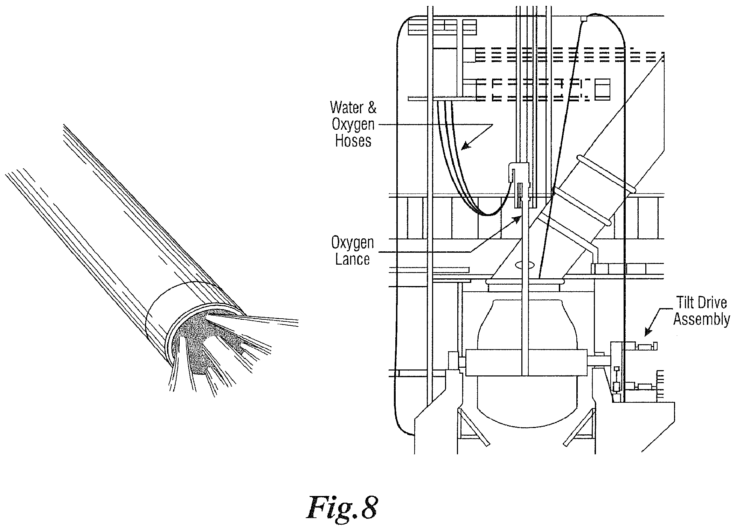

**FIG. 8** illustrates an example of a center hole (aperture **30**) oxygen lance. A typical lance diameter is 10 or 12 inches. A proportioned center hole (aperture **30**) is 2 or 3 inches. The close-up shows a preferred embodiment having four nozzles **40.** The inset shows a preferred oxygen lance apparatus 10 positioning.

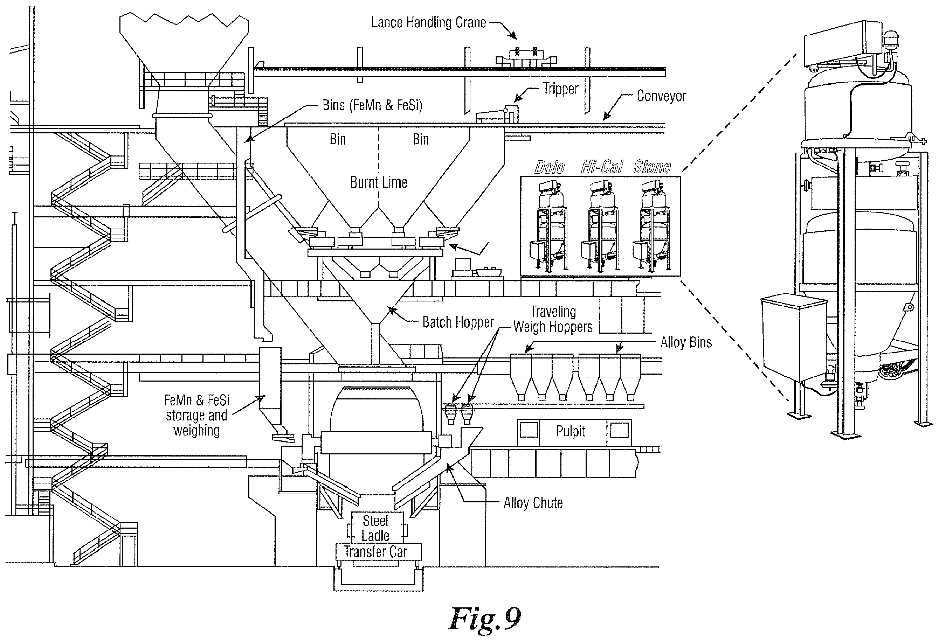

**FIG. 9** illustrates an example of a basic oxygen process with lime injection equipment as would be understood by a person of skill in the art. In this preferred embodiment, lime injection equipment of **FIG. 5** is illustrated.

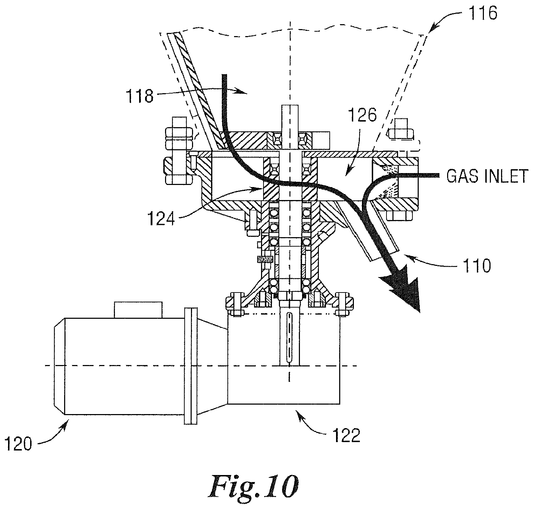

**FIG. 10** is a schematic of a roto-feed feeder unit 106. In a preferred embodiment, material enters through a dispensing vessel **116.** An agitator **118** connected to a motor **120** through a gearbox **122** and rotor **124** moves the material. The material flows through a housing **126,** accompanied by a gas from a gas conveying inlet **128.** The material and gas exit the housing **126** through piping **110.**

In use, the system has a dual pressure regulated oxygen supply to the Lime Pipe (inner wear barrel **28** of a particulate injection lance) allowing for lower pressure (30 PSI) to be used during Lime Injection sequences, and a higher pressure (150 PSI) to be used to purge the wear barrel **28** when the Lime Injection sequence is not running. The oxygen flow to the wear barrel **28** preferably is continuous through the entire blow sequence, maintaining positive pressure and reducing plugging issues due to slag ingestion.

Oxygen can be supplied either by an independent auxiliary gas tube **20,** or from a port included on the oxygen inlet **36** on the lance apparatus **10.** Oxygen pressure regulating valves **60** and **66** can be either mounted on the lime injection top adapter, on the lance **10,** or on a remote skid **56** located in the shop wherever it is convenient. Oxygen pressure can either be regulated by two pressure regulators/pressure regulating valves **60** and **66** (one low pressure and one high pressure) and a bypass valve **62** to determine which pressure is used, or by a single modulating pressure regulating valve.

The lime (or particulate) injection top adapter is designed to merge the lime and oxygen flows in a linear fashion, reducing potential wear points due to abrasion along the lime flow path, while helping to drive the lime through the lance. Special wear boxes **32** reduce wearing issues due to abrasion where a 90 degree turn in lime flow is required. Oxygen and lime flow pressures may be monitored at the lance, allowing the user to modulate the oxygen pressure valves to ensure ideal pressure and flow during Lime Injection and purge sequences. The lime injection top adapter includes a lime shut-off valve **16,** allowing the lance to be isolated from the lime feed unit to avoid back pressure to the feed unit (preferably made of stainless steel).

A replaceable wear pipe **28** may be used through the center of the lance to flow the particulate/lime, allowing for easy replacement if the pipe fails, and providing protection from wearing directly on the lance piping. Preferably, the lime injection top adapter is easily removable, and can be retrofitted to most lance designs. In addition to lime, the system can be used for injection of other materials, such as ore or carbon. The carrying gas can also very to be used with argon, air, nitrogen or oxygen.

Organic siloxane reduces surface charges, especially for dolomitic lime with sizing that is about 250 mesh. When lime product is added, a typical density of the pulverized lime product is about 42 lbs/ft³ when flowing and about 60 lbs/ft³ when settled and treated. The lime product during addition has sizing similar to flour or talcum powder - but appears liquid. The lime product flows easily and does not hydrate as other powdered lime and thus there is no plugging. The lime can flow at about 2,000 lbs/min in 3" pipe situated in the lance.

Preferably, a the design of the lance is a 12-inch diameter, 4-hole oxygen lance with a 2" or 3" diameter center hole for injection purposes that provides an oxygen shroud around powdered lime. Other preferred lances comprise a 4- or 5-hole lance with center holes to deliver oxygen to the process.

Nitrogen or oxygen can be used to purge the tank. Oxygen is the carrier gas for lime. Preferably, stainless steel flex-hose is used to convey the lime and carrier gas from the tank to the lance.

The process is an improvement over current technology for some or all of the following. The oxygen jets will act as a carrier for the powdered lime directly to the slag/steel interface. There is an expected reduction in process heat time related to the dissolution rate optimization of the lime addition. The process is flexible, as high calcium or dolomitic lime may be added when desired. With the improvements, there is expected a reduction in lime consumption by about 5 to 10 percent. The lance tip life is expected to be longer as the lime will shield the tip from bath radiation. Further, the distribution density of the powdered lime material will create less of a heat sink.

In addition, there will be metallurgical benefits of some or all of the following. Reactive lime at the oxidation reaction site will improve acid slag neutralization. There will be an improved dissolution rate optimization due to the larger surface area of the added materials. The control of the slag basicity will benefit refractory improvements. Further, process improvements will be available from introduction of the lime at the oxidation reaction site to improve early phosphorus removal, and to improve slag basicity and cool for late phosphorus removal.

Also, environmental benefits are expected from the present invention. Lime dust on the BOP operating floors and off gas will be reduced, improving safety and environmental concerns. There will be a concomitant reduction in cost associated with emissions management.

A controllable feed provides a steady, feed of material into a process, and the injection rate is adjustable and can be controlled to meet the needs of the process. As opposed to a volumetric feeder, the injection rate may be more accurately controlled. In addition, materials may be injected against pressure into a pressurized environment. Injection systems as described can be integrated into a larger process plant, and a wide range of materials may be conveyed therein.

While the present disclosure has been described in connection with preferred embodiments thereof, those of ordinary skill in the art will recognize that many modifications and variations are possible. The present disclosure is intended to be limited only by the following claims and not by the foregoing description which is intended to set forth the presently preferred embodiment.

It is to be understood that the descriptions of the present disclosure have been simplified to illustrate elements that are relevant for a clear understanding of the present disclosure, while eliminating, for purposes of clarity, other elements that may be well known. Those of ordinary skill in the art will recognize that other elements are desirable and/or required in order to implement the present disclosure. However, because such elements are well known in the art, and because they do not facilitate a better understanding of the present disclosure, a discussion of such elements is not provided herein. Additionally, it is to be understood that the present disclosure is not limited to the embodiments described above, but encompasses any and all embodiments within the scope of the description.

## Claims

1. A method for charging a particulate (14) to a metallurgical vessel through a lance system (10), the method comprising:
injecting through the lance system a low pressure carrier gas (18) such that the gas enters the metallurgical vessel;
feeding particulate to the low pressure carrier gas such that the gas carries the particulate into the metallurgical vessel;
stopping the feeding of the particulate; and
purging the lance system with a high pressure carrier gas (18), **characterised in that** the low pressure carrier gas and the high pressure carrier gas are provided by a dual pressure regulated gas supply.

2. The method of claim 1, further comprising monitoring and modulating the carrier gas (18) flow and particulate (14) flow.

3. The method of claim 1, or claim 2, wherein the particulate (14) is lime and the carrier gas (18) is oxygen.

4. The method of any preceding claim, wherein the low pressure carrier gas (18) is regulated by first (60) and second (66) regulating valves; and the high pressure carrier gas (18) is regulated by the first regulating valve (60) and a by-pass valve (62).

5. The method of any preceding claim, wherein the low pressure carrier gas (18) and the high pressure carrier gas (18) are regulated by a single regulating valve (60).

6. The method of claim 5, wherein the low pressure carrier gas (18) and the high pressure carrier gas (18) are modulated by a single pressure regulating valve (60).

7. An apparatus for charging a particulate to a metallurgical vessel through a lance system (10) comprising:
a metallurgical lance having a inner barrel (28) communicating with a tip of the lance and a header of the lance;
an outer tube (22) having a first end in open communication with the inner barrel at the header and a second end sealed on the outside of a particulate inlet tube (12);
the particulate inlet tube extending a first portion co-axially within the outer tube from the outer tube second end, and a second portion extending outside the outer tube;
the second portion of the particulate inlet tube having a shut-off valve (16);
an auxiliary gas tube (20) having a first end in open communication with the outer tube, wherein the open communication is positioned between the outer tube second sealed end and adjacent to the particulate inlet tube first portion, and the second end of the auxiliary gas tube in communication with at least one pressure regulating valve (60),
and **characterised by** a dual pressure regulated gas supply for providing a low pressure carrier gas (18) to carry particulate into the vessel and providing a high pressure carrier gas (18) for purging the lance system.

8. The apparatus for charging a particulate (14) of claim 7, further comprising at least one wear box (32) in the particulate inlet tube (12).

9. The apparatus for charging a particulate (14) of claim 7 or 8, further comprising at least one wear box (32) in the outer tube (22).

10. The apparatus for charging a particulate (14) of any of claims 7 - 9, wherein the at least one pressure regulating valve (60) comprises only one pressure regulating valve.

11. The apparatus for charging a particulate (14) of any of claims 7 - 10, wherein the at least one pressure regulating valve (60) further comprises a high pressure regulating valve (60), a low pressure regulating valve (66) downstream of the high pressure regulating valve, and a by-pass valve (62) to by-pass the low pressure regulating valve.

12. The apparatus for charging a particulate (14) of any of claims 7-11, further comprising a particulate flow meter (54) in the particulate inlet tube (12).

13. The apparatus for charging a particulate (14) of any of claims 7 - 12, further comprising a gas flow meter (52) in the auxiliary gas tube (20).

14. The apparatus for charging a particulate (14) of any of claims 7 - 13, wherein the at least one pressure regulating valve (60) is at a location remote from the metallurgical lance (10).

## Patentansprüche

1. Verfahren zum Laden eines Partikels (14) in ein metallurgisches Gefäß über ein Lanzensystem (10), das Verfahren umfassend:
Einspritzen eines Niedrigdruckträgergases (18) über das Lanzensystem, sodass das Gas in das metallurgische Gefäß eintritt;
Einspeisen von Partikeln in das Niedrigdruckträgergas, sodass das Gas die Partikel in das metallurgische Gefäß trägt;
Abbrechen des Einspeisens der Partikel; und
Spülen des Lanzensystems mit einem Hochdruckträgergas (18), **dadurch gekennzeichnet, dass** das Niedrigdruckträgergas und das Hochdruckträgergas von einer doppelten regulierten Gaszufuhr bereitgestellt werden.

2. Verfahren nach Anspruch 1, das ferner das Überwachen und Modulieren des Trägergasflusses (18) und Partikelflusses (14) umfasst.

3. Verfahren nach Anspruch 1 oder Anspruch 2, wobei das Partikel (14) Kalk ist, und das Trägergas (18) Sauerstoff ist.

4. Verfahren nach einem der vorhergehenden Ansprüche, wobei das Niedrigdruckträgergas (18) von ersten (60) und zweiten (66) Regelventilen reguliert wird; und das Hochdruckträgergas (18) vom ersten Regelventil (60) und ein Umleitventil (62) reguliert wird.

5. Verfahren nach einem der vorhergehenden Ansprüche, wobei das Niedrigdruckträgergas (18) und das Hochdruckträgergas (18) von einem einzigen Regelventil (60) reguliert werden.

6. Verfahren nach Anspruch 5, wobei das Niedrigdruckträgergas (18) und das Hochdruckträgergas (18) von einem einzigen Druckregelventil (60) moduliert werden.

7. Vorrichtung zum Laden eines Partikels in ein metallurgisches Gefäß über ein Lanzensystem (10) umfassend:
eine metallurgische Lanze, die eine innere Trommel (28) umfasst, die mit einer Spitze der Lanze und einem Kopf der Lanze verbunden ist;
eine äußere Röhre (22), die ein erstes Ende, das in offener Verbindung mit der inneren Trommel am Kopf steht, und ein zweite Ende aufweist, das an der Außenseite der Partikeleinlassröhre (12) dichtschließend ist;
die Partikeleinlassröhre, die einen ersten Abschnitt koaxial in der äußeren Röhre vom zweiten Ende der äußeren Röhre erstreckt, und einen zweiten Abschnitt, der sich außerhalb der äußeren Röhre erstreckt;
den zweiten Abschnitt der Partikeleinlassröhre, der ein Absperrventil (16) umfasst;
ein zusätzliche Gasröhre (20), die ein erstes Ende in offener Verbindung mit der äußeren Röhre aufweist, wobei die offene Verbindung zwischen dem zweiten dichtschließenden Ende der zweiten Röhre und neben dem ersten Abschnitt der Partikeleinlassröhre angeordnet ist, und das zweite Ende der zusätzlichen Gasröhre in Verbindung mit mindestens einem Druckregelventil (60) steht,
und **gekennzeichnet durch** eine doppelte druckgeregelte Gaszufuhr zum Bereitstellen eines Niedrigdruckträgergas (18) zum Tragen von Partikeln in das Gefäß und Bereitstellen eines Hochdruckträgergases (18) zum Spülen des Lanzensystems.

8. Vorrichtung zum Laden eines Partikels (14) nach Anspruch 7, die ferner mindestens einen Verschleißschutzkasten (32) in der Partikeleinlassröhre (12) umfasst.

9. Vorrichtung zum Laden eines Partikels (14) nach Anspruch 7 oder 8, die ferner mindestens einen Verschleißkasten (32) in der äußeren Röhre (22) umfasst.

10. Vorrichtung zum Laden eines Partikels (14) nach einem der Ansprüche 7 - 9, wobei das mindestens eine Druckregelventil (60) nur ein Druckregelventil umfasst.

11. Verfahren zum Laden eines Partikels (14) nach einem der Ansprüche 7 - 10, wobei das mindestens eine Druckregelventil (60) ferner ein Hochdruckregelventil (60), ein Niedrigdruckregelventil (66), das dem Hochdruckregelventil nachgelagert ist, und ein Umleitventil (62) zum Umgehen des Niedrigdruckregelventils umfasst.

12. Vorrichtung zum Laden eines Partikels (14) nach einem der Ansprüche 7 - 11, die ferner einen Partikelflussmesser (54) in der Partikeleinlassröhre (12) umfasst.

13. Vorrichtung zum Laden eines Partikels (14) nach einem der Ansprüche 7 - 12, die ferner einen Partikelflussmesser (52) in der zusätzlichen Partikelröhre (20) umfasst.

14. Vorrichtung zum Laden eines Partikels (14) nach einem der Ansprüche 7 - 13, wobei sich das mindestens eine Druckregelventil (60) an einer Stelle befindet, die von der metallurgischen Lanze (10) entfernt ist.

## Revendications

1. Procédé pour charger une matière particulaire (14) dans un récipient métallurgique par l'intermédiaire d'un système de lance (10), le procédé comprenant :
injecter, par l'intermédiaire du système de lance, un gaz porteur à basse pression (18) de telle sorte que le gaz entre dans le récipient métallurgique ;
alimenter une particule au gaz porteur à basse pression de telle sorte que le gaz porte la matière particulaire jusque dans le récipient métallurgique ;
arrêter l'alimentation de la matière particulaire ; et
purger le système de lance avec un gaz porteur à haute pression (18),
**caractérisé par le fait que** le gaz porteur à basse pression et le gaz porteur à haute pression sont fournis par une alimentation en gaz régulé à double pression.

2. Procédé selon la revendication 1, comprenant en surveiller et moduler le flux de gaz porteur (18) et le flux de matière particulaire (14).

3. Procédé selon la revendication 1 ou la revendication 2, dans lequel la matière particulaire (14) est de la chaux et le gaz porteur (18) est de l'oxygène.

4. Procédé selon l'une quelconque des revendications précédentes, dans lequel le gaz porteur à basse pression (18) est régulé par des première (60) et seconde (66) vannes de régulation ; et le gaz porteur à haute pression (18) est régulé par la première vanne de régulation (60) et une vanne de dérivation (62).

5. Procédé selon l'une quelconque des revendications précédentes, dans lequel le gaz porteur à basse pression (18) et le gaz porteur à haute pression (18) sont régulés par une unique vanne de régulation (60).

6. Procédé selon la revendication 5, dans lequel le gaz porteur à basse pression (18) et le gaz porteur à haute pression (18) sont modulés par une unique vanne de régulation de pression (60).

7. Appareil pour charger une matière particulaire dans un récipient métallurgique par l'intermédiaire d'un système de lance (10), comprenant :
une lance métallurgique ayant un cylindre interne (28) communiquant avec une pointe de la lance et un collecteur de la lance ;
un tube externe (22) ayant une première extrémité en communication ouverte avec le cylindre interne au niveau du collecteur et une seconde extrémité scellée sur l'extérieur d'un tube d'entrée de matière particulaire (12) ;
le tube d'entrée de matière particulaire étendant une première partie coaxialement à l'intérieur du tube externe à partir de la seconde extrémité de tube externe, et une seconde partie s'étendant à l'extérieur du tube externe ;
la seconde partie du tube d'entrée de matière particulaire ayant une vanne d'arrêt (16) ;
un tube de gaz auxiliaire (20) ayant une première extrémité en communication ouverte avec le tube externe, la communication ouverte étant positionnée entre la seconde extrémité scellée de tube externe et adjacente à la première partie de tube d'entrée de matière particulaire, et la seconde extrémité du tube de gaz auxiliaire en communication avec au moins une vanne de régulation de pression (60),
et **caractérisé par** une alimentation en gaz régulé à double pression pour fournir un gaz porteur à basse pression (18) pour transporter une matière particulaire jusque dans le récipient et fournir un gaz porteur à haute pression (18) pour purger le système de lance.

8. Appareil pour charger une matière particulaire (14) selon la revendication 7, comprenant en outre au moins une boîte d'usure (32) dans le tube d'entrée de matière particulaire (12).

9. Appareil pour charger une matière particulaire (14) selon la revendication 7 ou 8, comprenant en outre au moins une boîte d'usure (32) dans le tube externe (22).

10. Appareil pour charger une matière particulaire (14) selon l'une quelconque des revendications 7 à 9, dans lequel l'au moins une vanne de régulation de pression (60) comprend une seule vanne de régulation de pression.

11. Appareil pour charger une matière particulaire (14) selon l'une quelconque des revendications 7 à 10, dans lequel l'au moins une vanne de régulation de pression (60) comprend en outre une vanne de régulation haute pression (60), une vanne de régulation basse pression (66) en aval de la vanne de régulation haute pression, et une vanne de dérivation (62) pour contourner la vanne de régulation basse pression.

12. Appareil pour charger une matière particulaire (14) selon l'une quelconque des revendications 7 à 11, comprenant en outre un débitmètre de matière particulaire (54) dans le tube d'entrée de matière particulaire (12).

13. Appareil pour charger une matière particulaire (14) selon l'une quelconque des revendimatière particulairecations 7 à 12, comprenant en outre un débitmètre de gaz (52) dans le tube de gaz auxiliaire (20).

14. Appareil pour charger une matière particulaire (14) selon l'une quelconque des revendications 7 à 13, dans lequel l'au moins une vanne de régulation de pression (60) se trouve à un emplacement à distance de la lance métallurgique (10).
